# EUROPÄISCHE PATENTSCHRIFT

(11) **EP 2 925 562 B1**
(45) Veröffentlichungstag und Bekanntmachung des Hinweises auf die Patenterteilung: **17.08.2016**
(21) Anmeldenummer: 13802294.2
(22) Anmeldetag: 27.11.2013
(51) Int. Cl.: B60N 2/68, B60N 2/06, B60N 2/22, B60N 2/30

(54) **FAHRZEUGSITZ**
VEHICLE SEAT
SIÈGE DE VÉHICULE

(30) Priorität: 30.11.2012 DE 102012023782; 27.02.2013 DE 102013003787
(43) Veröffentlichungstag der Anmeldung: 07.10.2015
(73) Patentinhaber: Johnson Controls Components GmbH & Co. KG, 67657 Kaiserslautern (DE)
(72) Erfinder: DILL, Thomas, 67699 Heiligenmoschel (DE); PLUTA, Wolfgang, 67699 Heiligenmoschel (DE); HAMMANN, Heinrich, 67806 Teschenmoschel (DE); ENNS, Viktor, 67663 Kaiserslautern (DE)
(74) Vertreter: Liedhegener, Ralf
(86) Internationale Anmeldenummer: PCT/EP2013/074853
(87) Internationale Veröffentlichungsnummer: WO 2014/083051

(56) Entgegenhaltungen:
- DE-A1- 10 142 981
- DE-A1-102007 044 129

## Beschreibung

Die Erfindung betrifft einen Fahrzeugsitz mit den Merkmalen des Oberbegriffs des Anspruchs 1.

Ein derartiger Fahrzeugsitz ist aus der DE 10 2007 044 129 A1 bekannt.

### Stand der Technik

Aus der DE 10 2007 011 874 A1 ist ein weiterer Fahrzeugsitz bekannt.

Der als Rücksitz ausgeführte Fahrzeugsitz umfasst zwei Sitzsegmente, wobei eines der Sitzsegmente einen Sitzplatz und das andere Sitzsegment zwei Sitzplätze umfasst. Die beiden Sitzsegmente sind nebeneinander angeordnet und unabhängig voneinander mittels Längseinsteller in Fahrtrichtung verschiebbar. Die DE 101 42 981 A1 offenbart einen Lehnenpolsterträger für einen Fahrzeugsitz mit einem Grundblech und wenigstens einem mit dem Grundblech fest verbundenen, wenigstens teilweise umlaufenden Verstärkungsrahmen, wobei der Verstärkungsrahmen modular aufgebaut ist.

An dem einen Sitzplatz umfassenden Sitzsegment ist eine schwenkbare Rückenlehne angebracht. An dem zwei Sitzplätze umfassenden Sitzsegment sind zwei nebeneinander angeordnete Rückenlehnen angebracht, welche um dieselbe Schwenkachse relativ zu dem Sitzsegment schwenkbar sind.

### Aufgabe

Der Erfindung liegt die Aufgabe zu Grunde, einen Fahrzeugsitz der eingangs genannten Art zu verbessern, insbesondere einen vereinfachten Aufbau durch eine modulare Bauweise zu erreichen.

### Lösung

Diese Aufgabe wird erfindungsgemäß durch einen Fahrzeugsitz mit den Merkmalen des Anspruches 1 gelöst. Vorteilhafte Ausgestaltungen, welche einzeln oder in Kombination miteinander eingesetzt werden können, sind Gegenstand der Unteransprüche.

Ein gattungsgemäßer Fahrzeugsitz weist einen ersten Sitzplatz, welcher eine erste Rückenlehne umfasst, und mit einem zweiten Sitzplatz, welcher eine zweite Rückenlehne umfasst, auf.

Erfindungsgemäß ist die zweite Rückenlehne mit mindestens einem zweiten Längsholm verstärkt, welcher aus einem Rahmenteil gebildet ist, und die erste Rückenlehne ist mit mindestens einem ersten Längsholm verstärkt, welcher ein identisches Rahmenteil und zusätzlich ein Verstärkungsteil aufweist.

Dadurch sind die erste und die zweite Rückenlehne durch eine modulare Bauweise weitgehend gleichartig aufbaubar, obwohl unterschiedliche Anforderungen an die Festigkeit der ersten und zweiten Rückenlehne bestehen können.

Dies ist insbesondere relevant, wenn die erste Rückenlehne, im Gegensatz zur zweiten Rückenlehne, einen Gurtautomaten aufweist und daher im Crashfall Gurtkräfte aufnehmen muss, während die zweite Rückenlehne eine deutlich geringere Belastung erfährt.

Zur Erhöhung der Festigkeit weist die zweite Rückenlehne vorteilhaft zwei Längsholme zur Verstärkung auf, nämlich einen zweiten rechten Längsholm, welcher aus einem rechten Rahmenteil gebildet ist, und einen zweiten linken Längsholm, welcher aus einem linken Rahmenteil gebildet ist.

Vorzugsweise sind das rechte Rahmenteil und das linke Rahmenteil dabei spiegelsymmetrisch ausgeführt.

Zur Erhöhung der Festigkeit weist auch die erste Rückenlehne vorteilhaft zwei Längsholme zur Verstärkung auf, nämlich einen ersten rechten Längsholm, welcher ein rechtes Rahmenteil und ein Verstärkungsteil aufweist, und einen ersten linken Längsholm, welcher ein linkes Rahmenteil und ein Verstärkungsteil aufweist.

Gemäß einer vorteilhaften Ausgestaltung der Erfindung weist der erste rechte Längsholm ein rechtes Verstärkungsteil auf, und der erste linke Längsholm weist ein linkes Verstärkungsteil auf, wobei das rechte Verstärkungsteil und das linke Verstärkungsteil spiegelsymmetrisch ausgeführt sind.

Gemäß einer anderen vorteilhaften Ausgestaltung der Erfindung weist der erste rechte Längsholm ein rechtes Verstärkungsteil auf und der erste linke Längsholm weist ein Adaptionsverstärkungsteil auf, wobei das Adaptionsverstärkungsteil in Vertikalrichtung kürzer als das rechte Verstärkungsteil ausgeführt ist. Gemäß einer weiteren vorteilhaften Ausgestaltung der Erfindung weist der erste rechte Längsholm ein Adaptionsverstärkungsteil auf und der erste linke Längsholm weist ein linkes Verstärkungsteil auf, wobei das Adaptionsverstärkungsteil in Vertikalrichtung kürzer als das linke Verstärkungsteil ausgeführt ist. Das kürzere Adaptionsverstärkungsteil wird insbesondere an der Seite der Rückenlehne angebracht, an welcher im Crashfall eine geringere Crashlast auftritt.

Vorzugsweise weist die erste Rückenlehne ein erstes Lehnenblech auf, und die zweite Rückenlehne weist ein zweites Lehnenblech auf, wobei das erste Lehnenblech und das zweite Lehnenblech identisch ausgeführt sind.

Vorteilhaft weist die erste Rückenlehne einen ersten oberen Querholm auf, und die zweite Rückenlehne weist einen zweiten oberen Querholm auf, wobei der erste obere Querholm und der zweite obere Querholm identisch ausgeführt sind. Eine weitere Verringerung der Anzahl von verschiedenen Einzelteilen ergibt sich, wenn die erste Rückenlehne und/oder die zweite Rückenlehne einen unteren Querholm aufweist, welcher identisch mit dem ersten oberen Querholm und dem zweiten oberen Querholm ausgeführt ist.

Besonders vorteilhaft sind die oberen Querholme als Profilteile ausgeführt, welche über ihre gesamte Ausdehnung in Querrichtung einen zumindest annähernd identischen Querschnitt besitzen. Die Profilteile können von einem gewalzten oder gepressten Rohling einfach in gewünschter Länge abgeschnitten werden. Damit ist eine verhältnismäßig einfache Variabilität der Breiten der Rückenlehnen möglich.

Vorzugsweise ist die erste Rückenlehne an einem ersten Sitzteil schwenkbar angebracht, und die zweite Rückenlehne ist an einem zweiten Sitzteil schwenkbar angebracht.

Vorteilhaft ist auch eine dritte Rückenlehne an dem ersten Sitzteil schwenkbar angebracht und seitlich neben der ersten Rückenlehne angeordnet.

Wenn an der dritten Rückenlehne eine Verriegelungsvorrichtung angeordnet ist, welche mit einem an der ersten Rückenlehne angeordneten Bolzen zusammen wirkt, so ist die erste Rückenlehne mit der dritten Rückenlehne verriegelbar.

Dann ist dritte Rückenlehne bei mit dem Bolzen verriegelter Verriegelungsvorrichtung zusammen mit der ersten Rückenlehne relativ zu dem ersten Sitzteil schwenkbar.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:

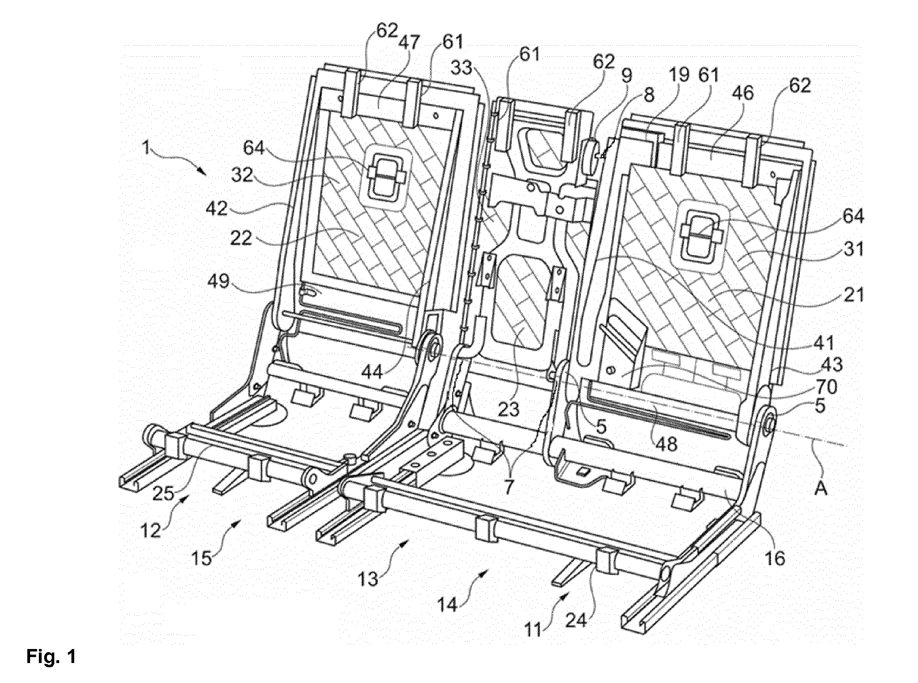

- Fig. 1:: eine perspektivische Darstellung eines Fahrzeugsitzes ohne Polsterung,
- Fig. 2:: eine Explosionsdarstellung eines Lehnenrohlings,
- Fig. 3:: eine Explosionsdarstellung einer Rückenlehne,
- Fig. 4:: Baukastenkomponenten der Längsholme gemäß einem ersten Ausführungsbeispiel,
- Fig. 5:: Baukastenkomponenten der Längsholme gemäß einem zweiten Ausführungsbeispiel und

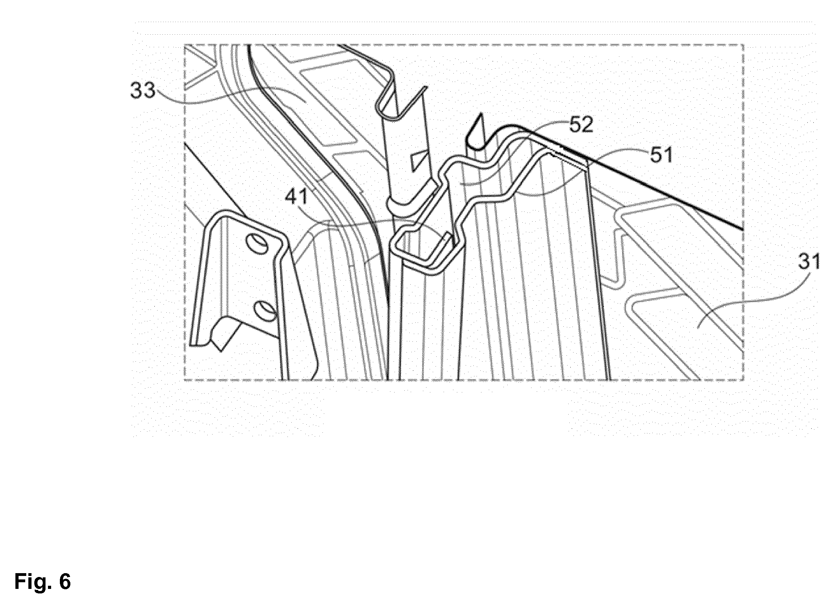

- Fig. 6:: einen horizontalen Schnitt durch eine Rückenlehne.

Ein Fahrzeugsitz 1 ist als Rücksitzanlage eines Kraftfahrzeuges ausgebildet. Der Fahrzeugsitz 1 umfasst ein erstes Sitzsegment 14 mit einem ersten Sitzteil 24 und ein zweites Sitzsegment 15 mit einem zweiten Sitzteil 25, welche unabhängig voneinander mittels Längseinsteller längseinstellbar mit der Fahrzeugstruktur des Kraftfahrzeuges verbunden sind.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet. Die Vertikalrichtung schließt vorliegend auch Winkel bis zu 30° zu der Senkrechten ein und umfasst insbesondere die Orientierung einer im Fahrzeug montierten Rückenlehne des Fahrzeugsitzes 1 in einer aufrechten Gebrauchsstellung.

Das erste Sitzsegment 14 nimmt ungefähr 60 % der gesamten Breite des Fahrzeugsitzes 1 ein, während das zweite Sitzsegment 15 ungefähr 40 % der besagten Breite einnimmt. Eine erste Rückenlehne 21 sowie eine dritte Rückenlehne 23 sind an dem ersten Sitzteil 24 um eine Schwenkachse A schwenkbar angebracht, während eine zweite Rückenlehne 22 an dem zweiten Sitzteil 25 schwenkbar angebracht ist. Die dritte Rückenlehne 23 ist in Querrichtung zwischen der ersten Rückenlehne 21 und der zweiten Rückenlehne 22 angeordnet. Die Schwenkachse A verläuft horizontal in Querrichtung.

Die erste Rückenlehne 21 bildet mit einem Teil des ersten Sitzteils 24 einen ersten Sitzplatz 11. Die dritte Rückenlehne 23 bildet mit einem Teil des ersten Sitzteils 24 einen dritten Sitzplatz 13. Die zweite Rückenlehne 22 bildet mit dem zweiten Sitzteil 25 einen zweiten Sitzplatz 12. Der erste Sitzplatz 11 und der dritte Sitzplatz 13 sind dem ersten Sitzsegment 14 zugeordnet, der zweite Sitzplatz 12 ist dem zweiten Sitzsegment 15 zugeordnet.

Die erste Rückenlehne 21 umfasst ein erstes Lehnenblech 31, welches mittels eines ersten rechten Längsholms 41, eines ersten linken Längsholms 43, eines ersten oberen Querholms 46 und eines ersten unteren Querholms 48 verstärkt ist. Die dritte Rückenlehne 23 umfasst ein drittes Lehnenblech 33. Die zweite Rückenlehne 22 umfasst ein zweites Lehnenblech 32, welches mittels eines zweiten rechten Längsholms 42, eines zweiten linken Längsholms 44, eines zweiten oberen Querholms 47 und eines zweiten unteren Querholms 49 verstärkt ist. Der erste rechte Längsholm 41 der ersten Rückenlehne 21 und der zweite linke Längsholm 44 der zweiten Rückenlehne 22 sind jeweils der dritten Rückenlehne 23 zugewandt.

Der zweite rechte Längsholm 42 ist aus einem rechten Rahmenteil 52 gebildet. Der zweite linke Längsholm 44 ist aus einem linken Rahmenteil 54 gebildet. Das rechte Rahmenteil 52 und das linke Rahmenteil 54 sind dabei spiegelsymmetrisch ausgeführt.

Der erste rechte Längsholm 41 ist aus einem rechten Rahmenteil 52 und einem rechten Verstärkungsteil 51 gebildet.

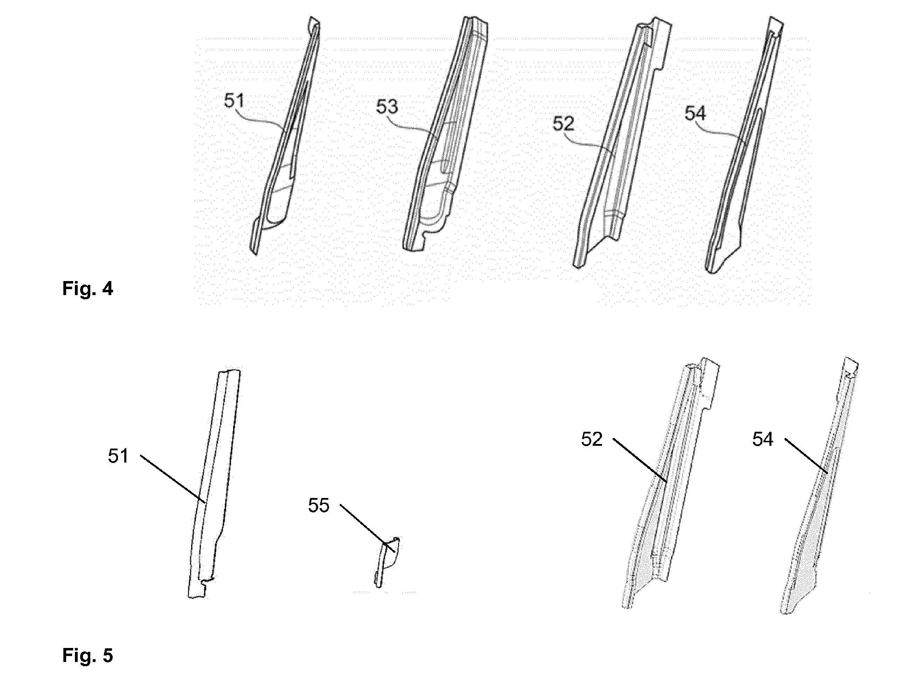

Gemäß einem ersten, in Fig. 4 dargestellten Ausführungsbeispiel ist der erste linke Längsholm 43 aus einem linken Rahmenteil 54 und einem linken Verstärkungsteil 53 gebildet. Das rechte Verstärkungsteil 51 und das linke Verstärkungsteil 53 sind dabei spiegelsymmetrisch ausgeführt.

Gemäß einem zweiten, in Fig. 5 dargestellten Ausführungsbeispiel ist der erste linke Längsholm 43 aus einem linken Rahmenteil 54 und einem Adaptionsverstärkungsteil 55 gebildet. Das rechte Verstärkungsteil 51 und das Adaptionsverstärkungsteil 55 sind dabei nicht spiegelsymmetrisch ausgeführt. Das Adaptionsverstärkungsteil 55, welches im Crashfall eine geringere Last als das rechte Verstärkungsteil 51 aufnehmen muss, ist kleiner, insbesondere in Vertikalrichtung kürzer als das rechte Verstärkungsteil 51 ausgeführt.

Es sind somit zwei identische rechte Rahmenteile 52 und zwei identische linke Rahmenteile 54 in dem Fahrzeugsitz 1 vorhanden, nämlich jeweils in der ersten Rückenlehne 21 sowie in der zweiten Rückenlehne 22.

Fertigungstechnisch sind die spiegelsymmetrischen rechten Rahmenteile 52 und linken Rahmenteile 54 mit einem ersten Presswerkzeug herstellbar.

Ebenso sind die in dem ersten Ausführungsbeispiel verwendeten spiegelsymmetrischen rechten Verstärkungsteile 51 und linken Verstärkungsteile 53 mit einem zweiten Presswerkzeug herstellbar. Zur Herstellung der vier Längsholme 41, 42, 43, 44 des ersten Ausführungsbeispiels sind somit nur zwei Presswerkzeuge erforderlich.

Die in dem zweiten Ausführungsbeispiel verwendeten nicht spiegelsymmetrischen Verstärkungsteile, nämlich die rechten Verstärkungsteile 51 und die Adaptionsverstärkungsteile 55, sind mit einem dritten Presswerkzeug herstellbar. Zur Herstellung der vier Längsholme 41, 42, 43, 44 des zweiten Ausführungsbeispiels sind somit ebenfalls nur zwei Presswerkzeuge erforderlich.

Der erste obere Querholms 46, der zweite obere Querholm 47 und der zweite untere Querholms 49 sind je als identisches Profilteil 56 ausgebildet. Es sind somit drei identische Profilteile 56 in dem Fahrzeugsitz 1 vorhanden, nämlich eines in der ersten Rückenlehne 21 sowie zwei in der zweiten Rückenlehne 22.

Ein Profilteil 56 ist dabei ein stabförmiges Bauteil, welches über seine gesamte Ausdehnung in Querrichtung einen identischen Querschnitt besitzt.

Der erste untere Querholm 48 ist vorliegend als Vierkantrohr ausgeführt und unterscheidet sich somit von dem Profilteil 56.

Jede der Rückenlehnen 21, 22, 23 umfasst weiterhin je eine erste Kopfstützenaufnahme 61, eine zweite Kopfstützenaufnahme 62 und einen Top-Tether-Bügel 64, welche ebenfalls jeweils identisch ausgeführt sind.

Ferner sind das erste Lehnenblech 31 der ersten Rückenlehne 21 und das zweite Lehnenblech 32 der zweiten Rückenlehne 22 identisch ausgeführt.

Die Sitzteile 24, 25 und die Rückenlehnen 21, 22, 23 sind in an sich bekannter Weise mit Polstern versehen. Die erste Rückenlehne 21 und die zweite Rückenlehne 22 nehmen jeweils ungefähr 40 % der gesamten Breite des Fahrzeugsitzes 1 ein, während die dritte Rückenlehne 23 ungefähr 20 % der besagten Breite einnimmt.

Das erste Sitzteil 24 umfasst ein in Querrichtung, parallel zu der Schwenkachse A verlaufendes Querrohr 16, welches sich annähernd über die komplette Breite des ersten Sitzteils 24 und damit auch annähernd über die komplette Breite des ersten Sitzsegments 14 erstreckt.

Die erste Rückenlehne 21 ist mittels zweier Beschläge 5 mit dem Querrohr 16 des ersten Sitzteils 24 verbunden. Die Beschläge 5 sind vorliegend bauartgleich. Jeder Beschlag 5 weist ein mit dem ersten Sitzteil 24 fest verbundenes, das heißt sitzteilfestes, erstes Beschlagteil und ein mit der ersten Rückenlehne 21 fest verbundenes, das heißt lehnenfestes, zweites Beschlagteil auf, welche relativ zueinander verschwenkbar sind. Die beiden Beschlagteile können in baulicher Hinsicht eine scheibenförmige Einheit bilden und beispielsweise durch einen Umklammerungsring zusammengehalten werden.

Vorliegend sind die Beschläge 5 jeweils als Rastbeschlag ausgebildet, das heißt die beiden Beschlagteile sind mittels beweglicher Riegel miteinander verriegelbar. Die Riegel werden beispielsweise durch einen federbelasteten Exzenter in eine verriegelnde Stellung bewegt. Die erste Rückenlehne 21 ist mittels der Beschläge 5 einerseits in ihrer Neigung relativ zu dem ersten Sitzteil 24 in verschiedene Gebrauchsstellungen einstellbar und andererseits nach vorne in eine Nichtgebrauchsstellung schwenkbar.

Die dritte Rückenlehne 23 ist mittels zweier Drehlager 7 mit dem Querrohr 16 des ersten Sitzteils 24 verbunden. Nahe dem der Schwenkachse A abgewandten oberen Ende der dritten Rückenlehne 23 ist eine Verriegelungsvorrichtung 9 angeordnet, welche mit einem an der ersten Rückenlehne 21 vorgesehenen Bolzen 8 zusammenwirkt.

Bei mit dem Bolzen 8 verriegelter Verriegelungsvorrichtung 9 ist die dritte Rückenlehne 23 zusammen mit der ersten Rückenlehne 21 relativ zu dem ersten Sitzteil 24 schwenkbar. Bei entriegelter Verriegelungsvorrichtung 9 ist die dritte Rückenlehne 23 unabhängig von der ersten Rückenlehne 21 relativ zu dem ersten Sitzteil 24 nach vorne in die Nichtgebrauchsstellung schwenkbar.

Jeder der drei Sitzplätze verfügt über einen Dreipunktgurt, wobei jeder Dreipunktgurt einen hier nicht dargestellten Gurtautomaten umfasst. Die Gurtautomaten des ersten Sitzplatzes 11 und des zweiten Sitzplatzes 12 sind jeweils an der Fahrzeugstruktur befestigt.

Der Gurtautomat des dritten Sitzplatzes 13 ist an der ersten Rückenlehne 21 des ersten Sitzplatzes 11 befestigt. Damit befindet sich der Gurtautomat des dritten Sitzplatzes 13 ebenfalls in dem ersten Sitzsegment 14.

Vorliegend ist der Gurtautomat des dritten Sitzplatzes 13 nahe der Schwenkachse A und unmittelbar neben dem ersten rechten Längsholm 41 der ersten Rückenlehne 21 angeordnet. Von dort verläuft ein hier nicht dargestelltes Gurtband annähernd parallel zu dem ersten rechten Längsholm 41 und parallel zu dem ersten Lehnenblech 31 zu einem Gurtumlenkbügel 19, welcher nahe dem der Schwenkachse A abgewandten oberen Ende der ersten Rückenlehne 21 und damit auch nahe dem Bolzen 8 angeordnet ist.

Die erste Rückenlehne 21 weist dazu ein Aufnahmeblech 70 auf, welches den nicht dargestellten Gurtautomat des dritten Sitzplatzes 13 aufnimmt. Das Aufnahmeblech 70 ist neben dem ersten rechten Längsholm 41 und oberhalb der Schwenkachse A angeordnet. Das Aufnahmeblech 70 ist weitgehend flach ausgebildet und weist an der dem ersten rechten Längsholm 41 abgewandten Seite eine Umbiegung auf.

Das Aufnahmeblech 70 liegt auf dem ersten Lehnenblech 31 auf. Vorliegend ist das Aufnahmeblech 70 mit dem ersten rechten Längsholm 41 und mit dem ersten unteren Querholm 48 verbunden, insbesondere verschweißt.

Der nicht dargestellte Gurtautomat des dritten Sitzplatzes 13 liegt vorliegend an dem Aufnahmeblech 70 an und ist mit diesem verbunden, insbesondere verschraubt. Dazu weist das Aufnahmeblech 70 vorliegend einen abstehenden Schweißbolzen mit Außengewinde auf, welcher eine Befestigungsplatte des Gurtautomaten durchdringt, und auf welchen dann eine Mutter mit Innengewinde aufgeschraubt ist.

Der Gurtumlenkbügel 19 definiert dabei einen Gurtaustrittspunkt für das Gurtband des dritten Sitzplatzes 13. Es ist auch denkbar, dass der Gurtautomat nahe dem der Schwenkachse A abgewandten oberen Ende der ersten Rückenlehne 21 und nahe dem Bolzen 8 angeordnet ist. In diesem Fall kann der Gurtumlenkbügel 19 entfallen, wenn der Gurtautomat selbst den Gurtaustrittspunkt für das Gurtband des dritten Sitzplatzes 13 definiert.

Der Gurtumlenkbügel 19 befindet sich in Querrichtung unmittelbar neben dem ersten rechten Längsholm 41, welcher sich unmittelbar neben dem zugehörigen Beschlag 5 befindet. Der zugehörige Beschlag 5, der rechte Längsholm 41 und der Gurtumlenkbügel 19 liegen also in Vertikalrichtung annähernd übereinander und in Querrichtung nur geringfügig zueinander versetzt.

Befindet sich ein Insasse auf dem dritten Sitzplatz 13 und benutzt den zugehörigen Gurt, so zieht das Gurtband im Crashfall an dem Gurtumlenkbügel 19 in Fahrtrichtung nach vorne und bewirkt dadurch ein Moment auf die erste Rückenlehne 21 um die Schwenkachse A. Dieses Moment wird von dem ersten rechten Längsholm 41 zu dem Beschlag 5 übertragen und in diesen eingeleitet. Der Beschlag überträgt das Moment in das Querrohr 16, und von dort wird das Moment, vorliegend über den Längseinsteller, in die Fahrzeugstruktur eingeleitet.

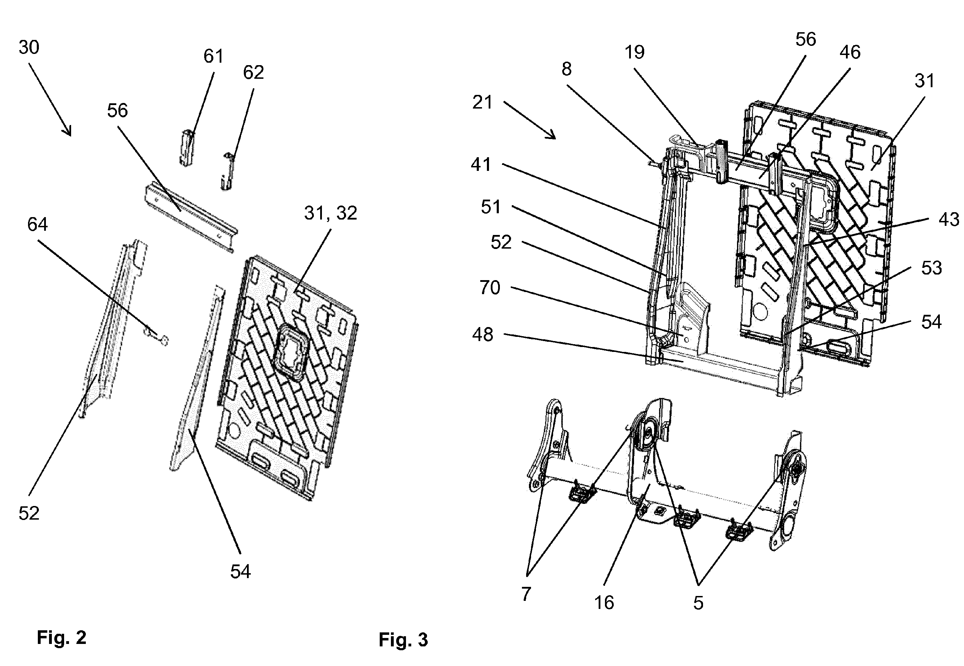

Die erste Rückenlehne 21 und die zweite Rückenlehne 22 sind weitgehend gleichartig aufgebaut und umfassen je ein Lehnenblech 31 bzw. 32, ein rechtes Rahmenteil 52, ein linkes Rahmenteile 54, ein Profilteil 56 als oberen Querholm 46 bzw. 47 sowie eine erste Kopfstützenaufnahme 61, eine zweite Kopfstützenaufnahme 62 und einen Top-Tether-Bügel 64. Ein solcher Lehnenrohling 30 ist in Fig. 2 dargestellt.

Die zweite Rückenlehne 22 erhält zusätzlich ein weiteres Profilteil 56 als zweiten unteren Querholm 49. Die erste Rückenlehne 21 erhält zusätzlich das Vierkantrohr als ersten unteren Querholm 48, die Verstärkungsteile 51, 53, beziehungsweise das Adaptionsverstärkungsteil 55, den Gurtautomat, den Gurtumlenkbügel 19, das Aufnahmeblech 70 sowie den Bolzen 8.

### Bezugszeichenliste

- 1: Fahrzeugsitz
- 5: Beschlag
- 7: Drehlager
- 8: Bolzen
- 9: Verriegelungsvorrichtung
- 11: erster Sitzplatz
- 12: zweiter Sitzplatz
- 13: dritter Sitzplatz
- 14: erstes Sitzsegment
- 15: zweites Sitzsegment
- 16: Querrohr
- 19: Gurtumlenkbügel
- 21: erste Rückenlehne
- 22: zweite Rückenlehne
- 23: dritte Rückenlehne
- 24: erstes Sitzteil
- 25: zweites Sitzteil
- 30: Lehnenrohling
- 31: erstes Lehnenblech
- 32: zweites Lehnenblech
- 33: drittes Lehnenblech
- 41: erster rechter Längsholm
- 42: zweiter rechter Längsholm
- 43: erster linker Längsholm
- 44: zweiter linker Längsholm
- 46: erster oberer Querholm
- 47: zweiter oberer Querholm
- 48: erster unterer Querholm
- 49: zweiter unterer Querholm
- 51: rechtes Verstärkungsteil
- 52: rechtes Rahmenteil
- 53: linkes Verstärkungsteil
- 54: linkes Rahmenteil
- 55: Adaptionsverstärkungsteil
- 56: Profilteil
- 61: erste Kopfstützenaufnahme
- 62: zweite Kopfstützenaufnahme
- 64: Top-Tether-Bügel
- 70: Aufnahmeblech
- A: Schwenkachse

## Patentansprüche

1. Fahrzeugsitz (1) mit einem ersten Sitzplatz (11), welcher eine erste Rückenlehne (21) umfasst, und mit einem zweiten Sitzplatz (12), welcher eine zweite Rückenlehne (22) umfasst,
wobei die zweite Rückenlehne (22) mit mindestens einem zweiten Längsholm (42, 44) verstärkt ist, welcher aus einem Rahmenteil (52, 54) gebildet ist, und die erste Rückenlehne (21) mit mindestens einem ersten Längsholm (41, 43) verstärkt ist, welcher ein identisches Rahmenteil (52, 54) und zusätzlich ein Verstärkungsteil (51, 53, 55) aufweist,
**dadurch gekennzeichnet, dass** die erste Rückenlehne (21) mit einem ersten rechten Längsholm (41), welcher ein rechtes Rahmenteil (52) und ein Verstärkungsteil (51, 55) aufweist, und mit einem ersten linken Längsholm (43), welcher ein linkes Rahmenteil (54) und ein Verstärkungsteil (53, 55) aufweist, verstärkt ist,
und
dass der erste rechte Längsholm (41) ein rechtes Verstärkungsteil (51) aufweist und der erste linke Längsholm (43) ein Adaptionsverstärkungsteil (55) aufweist, wobei das Adaptionsverstärkungsteil (55) in Vertikalrichtung kürzer als das rechte Verstärkungsteil (51) ausgeführt ist, oder
dass der erste rechte Längsholm (41) ein Adaptionsverstärkungsteil (55) aufweist und der erste linke Längsholm (43) ein linkes Verstärkungsteil (53) aufweist, wobei das Adaptionsverstärkungsteil (55) in Vertikalrichtung kürzer als das linke Verstärkungsteil (53) ausgeführt ist.

2. Fahrzeugsitz (1) nach Anspruch 1, **dadurch gekennzeichnet, dass** die zweite Rückenlehne (22) mit einem zweiten rechten Längsholm (42), welcher aus einem rechten Rahmenteil (52) gebildet ist, und mit einen zweiten linken Längsholm (44), welcher aus einem linken Rahmenteil (54) gebildet ist, verstärkt ist.

3. Fahrzeugsitz (1) nach Anspruch 2, **dadurch gekennzeichnet, dass** das rechte Rahmenteil (52) und das linke Rahmenteil (54) spiegelsymmetrisch ausgeführt sind.

4. Fahrzeugsitz (1) nach einem der vorstehenden Ansprüche, **dadurch gekennzeichnet, dass**
der erste rechte Längsholm (41) ein rechtes Verstärkungsteil (51) aufweist und der erste linke Längsholm (43) ein linkes Verstärkungsteil (53) aufweist, wobei das rechte Verstärkungsteil (51) und das linke Verstärkungsteil (53) spiegelsymmetrisch ausgeführt sind.

5. Fahrzeugsitz (1) nach einem der vorstehenden Ansprüche, **dadurch gekennzeichnet, dass** die erste Rückenlehne (21) ein erstes Lehnenblech (31) aufweist und die zweite Rückenlehne (22) ein zweites Lehnenblech (32) aufweist, wobei das erste Lehnenblech (31) und das zweite Lehnenblech (32) identisch ausgeführt sind.

6. Fahrzeugsitz (1) nach einem der vorstehenden Ansprüche, **dadurch gekennzeichnet, dass** die erste Rückenlehne (21) einen ersten oberen Querholm (46) aufweist und die zweite Rückenlehne (22) einen zweiten oberen Querholm (47) aufweist, wobei der erste obere Querholm (46) und der zweite obere Querholm (47) identisch ausgeführt sind.

7. Fahrzeugsitz (1) nach Anspruch 6, **dadurch gekennzeichnet, dass** die erste Rückenlehne (21) und/oder die zweite Rückenlehne (22) einen unteren Querholm (48, 49) aufweist, welcher identisch mit dem ersten oberen Querholm (46) und dem zweiten oberen Querholm (47) ausgeführt ist.

8. Fahrzeugsitz (1) nach Anspruch 6 oder 7, **dadurch gekennzeichnet, dass** die oberen Querholme (46, 47) als Profilteile (56) ausgeführt sind, welche über ihre gesamte Ausdehnung in Querrichtung einen annähernd identischen Querschnitt besitzen.

9. Fahrzeugsitz (1) nach einem der vorstehenden Ansprüche, **dadurch gekennzeichnet, dass** die erste Rückenlehne (21) an einem ersten Sitzteil (24) schwenkbar angebracht ist, und dass die zweite Rückenlehne (22) an einem zweiten Sitzteil (25) schwenkbar angebracht ist.

10. Fahrzeugsitz (1) nach Anspruch 9, **dadurch gekennzeichnet, dass** eine dritte Rückenlehne (23) an dem ersten Sitzteil (24) schwenkbar angebracht ist.

11. Fahrzeugsitz (1) nach Anspruch 10, **dadurch gekennzeichnet, dass** an der dritten Rückenlehne (23) eine Verriegelungsvorrichtung (9) angeordnet ist, welche mit einem an der ersten Rückenlehne (21) angeordneten Bolzen (8) zusammen wirkt.

12. Fahrzeugsitz (1) nach Anspruch 11, **dadurch gekennzeichnet, dass** die dritte Rückenlehne (23) bei mit dem Bolzen (8) verriegelter Verriegelungsvorrichtung (9) zusammen mit der ersten Rückenlehne (21) relativ zu dem ersten Sitzteil (24) schwenkbar ist.

## Claims

1. Vehicle seat (1) having a first seating position (11) which comprises a first backrest (21) and having a second seating position (12) which comprises a second backrest (22),
wherein the second backrest (22) is reinforced with at least one second longitudinal member (42, 44) which is formed from a frame part (52, 54) and the first backrest (21) is reinforced with at least one first longitudinal member (41, 43) which has an identical frame part (52, 54) and additionally a reinforcement part (51, 53, 55), **characterized in that** the first backrest (21) is reinforced with a first right-hand longitudinal member (41), which has a right-hand frame part (52) and a reinforcement part (51, 55), and with a first left-hand longitudinal member (43), which has a left-hand frame part (54) and a reinforcement part (53, 55),
and
**in that** the first right-hand longitudinal member (41) has a right-hand reinforcement part (51) and the first left-hand longitudinal member (43) has an adaptation reinforcement part (55), wherein the adaptation reinforcement part (55) is designed to be shorter in a vertical direction than the right-hand reinforcement part (51), or
**in that** the first right-hand longitudinal member (41) has an adaptation reinforcement part (55) and the first left-hand longitudinal member (43) has a left-hand reinforcement part (53), wherein the adaptation reinforcement part (55) is designed to be shorter in a vertical direction than the left-hand reinforcement part (53).

2. Vehicle seat (1) according to Claim 1, **characterized in that** the second backrest (22) is reinforced with a second right-hand longitudinal member (42), which is formed from a right-hand frame part (52), and with a second left-hand longitudinal member (44), which is formed from a left-hand frame part (54).

3. Vehicle seat (1) according to Claim 2, **characterized in that** the right-hand frame part (52) and the left-hand frame part (54) are of mirror-symmetrical form.

4. Vehicle seat (1) according to one of the preceding claims, **characterized in that** the first right-hand longitudinal member (41) has a right-hand reinforcement part (51) and the first left-hand longitudinal member (43) has a left-hand reinforcement part (53), wherein the right-hand reinforcement part (51) and the left-hand reinforcement part (53) are of mirror-symmetrical form.

5. Vehicle seat (1) according to one of the preceding claims, **characterized in that** the first back rest (21) has a first backrest panel (31) and the second backrest (22) has a second backrest panel (32), wherein the first backrest panel (31) and the second backrest panel (32) are of identical design.

6. Vehicle seat (1) according to one of the preceding claims, **characterized in that** the first backrest (21) has a first upper transverse member (46) and the second backrest (22) has a second upper transverse member (47), wherein the first upper transverse member (46) and the second upper transverse member (47) are of identical design.

7. Vehicle seat (1) according to Claim 6, **characterized in that** the first backrest (21) and/or the second backrest (22) has a lower transverse member (48, 49) which is of identical design to the first upper transverse member (46) and to the second upper transverse member (47).

8. Vehicle seat (1) according to Claim 6 or 7, **characterized in that** the upper transverse members (46, 47) are designed as profile parts (56) which have an approximately identical cross section over their entire extent in the transverse direction.

9. Vehicle seat (1) according to one of the preceding claims, **characterized in that** the first backrest (21) is pivotably attached to a first seat part (24) and **in that** the second backrest (22) is pivotably attached to a second seat part (25).

10. Vehicle seat (1) according to Claim 9, **characterized in that** a third backrest (23) is pivotably attached to the first seat part (24).

11. Vehicle seat (1) according to Claim 10, **characterized in that** a locking device (9) is arranged on the third backrest (23), which locking device interacts with a pin (8) arranged on the first backrest (21).

12. Vehicle seat (1) according to Claim 11, **characterized in that**, when the locking device (9) is locked to the pin (8), the third backrest (23) is pivotable together with the first backrest (21) relative to the first seat part (24).

## Revendications

1. Siège de véhicule (1) comprenant une première place de siège (11) qui comprend un premier dossier (21) et une deuxième place de siège (12) qui comprend un deuxième dossier (22), le deuxième dossier (22) étant renforcé avec au moins un deuxième longeron (42, 44) qui est formé d'une partie de cadre (52, 54) et le premier dossier (21) étant renforcé avec au moins un premier longeron (41, 43) qui présente une partie de cadre identique (52, 54) et en outre une partie de renforcement (51, 53, 55),
**caractérisé en ce que** le premier dossier (21) est renforcé avec un premier longeron droit (41) qui présente une première partie de cadre droite (52) et une partie de renforcement (51, 55), et avec un premier longeron gauche (43) qui présente une partie de cadre gauche (54) et une partie de renforcement (53, 55), et
**en ce que** le premier longeron droit (41) présente une partie de renforcement droite (51) et le premier longeron gauche (43) présente une partie de renforcement d'adaptation (55), la partie de renforcement d'adaptation (55) étant réalisée dans la direction verticale de manière plus courte que la partie de renforcement droite (51) ou
**en ce que** le premier longeron droit (41) présente une partie de renforcement d'adaptation (55) et le premier longeron gauche (43) présente une partie de renforcement gauche (53), la partie de renforcement d'adaptation (55) étant réalisée dans la direction verticale de manière plus courte que la partie de renforcement gauche (53).

2. Siège de véhicule (1) selon la revendication 1, **caractérisé en ce que** le deuxième dossier (22) est renforcé avec un deuxième longeron droit (42), qui est formé d'une partie de cadre droite (52) et avec un deuxième longeron gauche (44) qui est formé d'une partie de cadre gauche (54).

3. Siège de véhicule (1) selon la revendication 2, **caractérisé en ce que** la partie de cadre droite (52) et la partie de cadre gauche (54) sont réalisées avec une symétrie spéculaire.

4. Siège de véhicule (1) selon l'une quelconque des revendications précédentes, **caractérisé en ce que** le premier longeron droit (41) présente une partie de renforcement droite (51) et le premier longeron gauche (43) présente une partie de renforcement gauche (53), la partie de renforcement droite (51) et la partie de renforcement gauche (53) étant réalisées avec une symétrie spéculaire.

5. Siège de véhicule (1) selon l'une quelconque des revendications précédentes, **caractérisé en ce que** le premier dossier (21) présente une première tôle de dossier (31) et le deuxième dossier (22) présente une deuxième tôle de dossier (32), la première tôle de dossier (31) et la deuxième tôle de dossier (32) étant réalisées de manière identique.

6. Siège de véhicule (1) selon l'une quelconque des revendications précédentes, **caractérisé en ce que** le premier dossier (21) présente une première traverse supérieure (46) et le deuxième dossier (22) présente une deuxième traverse supérieure (47), la première traverse supérieure (46) et la deuxième traverse supérieure (47) étant réalisées de manière identique.

7. Siège de véhicule (1) selon la revendication 6, **caractérisé en ce que** le premier dossier (21) et/ou le deuxième dossier (22) présentent une traverse inférieure (48, 49), laquelle (lesquelles) est (sont) réalisée(s) de manière identique à la première traverse supérieure (46) et à la deuxième traverse supérieure (47).

8. Siège de véhicule (1) selon la revendication 6 ou 7, **caractérisé en ce que** les traverses supérieures (46, 47) sont réalisées sous forme de pièces profilées (56) qui possèdent sur toute leur étendue dans la direction transversale une section transversale approximativement identique.

9. Siège de véhicule (1) selon l'une quelconque des revendications précédentes, **caractérisé en ce que** le premier dossier (21) est monté de manière pivotante au niveau d'une première partie de siège (24) et **en ce que** le deuxième dossier (22) est monté de manière pivotante au niveau d'une deuxième partie de siège (25).

10. Siège de véhicule (1) selon la revendication 9, **caractérisé en ce qu'**un troisième dossier (23) est monté de manière pivotante au niveau de la première partie de siège (24).

11. Siège de véhicule (1) selon la revendication 10, **caractérisé en ce qu'**un dispositif de verrouillage (9) est disposé au niveau du troisième dossier (23), lequel coopère avec un boulon (8) disposé au niveau du premier dossier (21).

12. Siège de véhicule (1) selon la revendication 11, **caractérisé en ce que** le troisième dossier (23), lorsque le dispositif de verrouillage (9) est verrouillé avec le boulon (8), peut pivoter conjointement avec le premier dossier (21) par rapport à la première partie de siège (24).
